(19) Europäisches Patentamt / European Patent Office / Office européen des brevets

(11) **EP 3 181 375 B1**

(12) **EUROPEAN PATENT SPECIFICATION**

(45) Date of publication and mention
of the grant of the patent:
**02.10.2019 Bulletin 2019/40**

(51) Int Cl.:
**B60C 9/18** *(2006.01)* **B60C 9/22** *(2006.01)*
**B60C 9/28** *(2006.01)* **B60C 9/20** *(2006.01)*

(21) Application number: **15831941.8**

(22) Date of filing: **05.08.2015**

(86) International application number:
**PCT/JP2015/003941**

(87) International publication number:
**WO 2016/024391 (18.02.2016 Gazette 2016/07)**

(54) **PNEUMATIC TIRE**

LUFTREIFEN

BANDAGE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2014 JP 2014165451**

(43) Date of publication of application:
**21.06.2017 Bulletin 2017/25**

(73) Proprietor: **Bridgestone Corporation
Tokyo 104-8340 (JP)**

(72) Inventor: **TASHIRO, Yuichi
Tokyo 104-8340 (JP)**

(74) Representative: **Oxley, Robin John George
Marks & Clerk LLP
15 Fetter Lane
London EC4A 1BW (GB)**

(56) References cited:
**JP-A- H04 110 205    JP-A- 2007 161 027
JP-A- 2009 280 167    JP-A- 2012 171 423
US-A- 5 240 057    US-A1- 2010 230 020**

EP 3 181 375 B1

**Description**

TECHNICAL FIELD

This disclosure relates to a pneumatic tire, in particular, a pneumatic tire capable of reducing the load dependence of cornering force, and simultaneously ensuring the durability.

BACKGROUND

Conventionally, it is known to dispose as reinforcing members of pneumatic tire inclined belt layers having cords inclined with respect to a tire circumferential direction, on a tire radial outer side of a crown portion of a carcass extending between bead portions.

Namely, conventionally, as an indicator for steering stability, the cornering force has been obtained by ensuring the tire widthwise rigidity of the inclined belt layer.

In the case of using such reinforcing member, the cornering force is increased. However, there is a problem in the load dependence, such that a difference occurs in the degree of cornering force obtained depending on the degree of the load to the tire. For example, in the case where a pneumatic tire having the aforementioned reinforcing structure is installed on a small FF vehicle, of which the load to the front wheel and the load to the rear wheel are greatly different, the cornering force obtained with the front wheel is significantly larger than the cornering force obtained with the rear wheel, and thus, for example, there is a problem of a tendency of oversteering and reduction of steering stability during cornering.

Regarding this, PTL 1 suggests a pneumatic tire which ensures the rigidity of tire without substantively increasing the load dependence of cornering force, by disposing a circumferential groove on tread widthwise end regions, and arranging circular reinforcing members on the bottom of this circumferential groove.

PTL1: JP2007-62468A. Attention is also drawn to the disclosures of JP2009280167, JP2012171423, JP2007161027, US5,240,057, US2010/230020 and JPH04 110205.

SUMMARY

(Technical Problem)

However, when using the reinforcing structure as disclosed in PTL1, it is necessarily to prepare members other the pneumatic tire, such as nylon cords, etc., for forming the reinforcing member. Moreover, a process for arranging the nylon cords, etc. by winding the same on the groove bottom is necessary. Therefore, there is a problem of increase of the manufacturing cost of the pneumatic tire. Moreover, since the reinforcing member is exposed to the outside, there is a problem that when a large force is exerted to the reinforcing member from the outside during travelling, the reinforcing member ruptures, making it impossible to obtain a sufficient rigidity. Therefore, desired is a method for improving, i.e., reducing the load dependence of cornering force, without using the aforementioned reinforcing member.

Regarding the aforementioned problems, this disclosure is to provide a pneumatic tire capable of reducing the load dependence of cornering force, and simultaneously ensuring the durability.

(Solution to Problem)

The subject of this disclosure is a pneumatic tire according to claim 1. Preferable features are described in the dependent claims.

Here, the "applicable rim" is a valid industrial standard for the region in which the tire is produced or used, and refers to a standard rim of an applicable size according to the "JATMA Year Book" in Japan, the "ETRTO STANDARD MANUAL" in Europe, or the "TRA YEAR BOOK" in the United States of America (the "Measuring Rim" in the STANDARDS MANUAL of ETRTO, and the "Design Rim" in the "YEAR BOOK" of TRA). The "prescribed internal pressure" refers to an internal pressure corresponding to a tire maximum load carrying capacity (maximum air pressure) of a standard of in the aforementioned tire of an applicable size.

Here, "extending along the tire circumferential direction" is inclusive of cases that the cord is parallel to the tire circumferential direction, and cases that the cord slightly inclines with respect to the tire circumferential direction (an inclining angle with respect to the tire circumferential direction being 5° or less) as a result of forming a belt layer by spirally winding a strip having a cord coated with rubber.

Moreover, the "circumferential rigidity of the reinforcing belt" refers to a force necessary for generating a certain strain in the extension direction of the cords to a cut out unit reinforcing belt, when the unit reinforcing belt is cut out from the reinforcing belt and has a tire width wise unit width, a circumferential unit length, and a thickness inclusive of all the circumferential belt layers existing in the radial direction, and is applied with a tension in the extension direction of the cords.

"A circumferential rigidity of a circumferential of the reinforcing belt in a tire widthwise region between an end of the one inclined belt layer and an end of the other inclined belt layer is higher than a circumferential rigidity of the reinforcing belt in a tire widthwise inner side of the region" refers to that an average value of the "circumferential rigidity of a circumferential of the reinforcing belt in a tire widthwise region between an end of the one inclined belt layer and an end of the other inclined belt layer" is higher than an average value of the "circumferential rigidity of the reinforcing belt in a tire widthwise inner side of the region".

Further, the "tire widthwise region between an end of the one inclined belt layer and an end of the other inclined belt layer" refers to a tire widthwise region between an end of one inclined belt layer on one tire widthwise half portion partitioned by the tire equatorial plane and an end of the other inclined belt layer, or a tire widthwise region between an end of one inclined belt layer on the other tire widthwise half portion and an end of the other inclined belt layer.

Here, "a number of circumferential belt layers disposed within the region is larger than a number of circumferential belt layers disposed on a tire widthwise side inner than the region" refers to that an average number of the "circumferential belt layers disposed within the region" is larger than an average number of the "circumferential belt layers disposed on a tire widthwise side inner than the region".

(Advantageous Effect)

According to this disclosure, it is possible to provide a pneumatic tire capable of reducing the load dependence of cornering force, and simultaneously ensuring the durability.

BRIEF DESCRIPTION OF THE DRAWINGS

FIG. 1 illustrates a tire widthwise schematic cross-sectional view of a pneumatic tire according to the first embodiment of this disclosure; and
FIG. 2 illustrates a schematic view of a belt structure of the tire of FIG. 1.

DETAILED DESCRIPTION

Having intensively studied the aforementioned problems, we discovered that in a pneumatic tire including a belt formed of two inclined belt layers, by forming the belt with two inclined belt layers with different tire widthwise widths, and reinforcing a region where merely one inclined belt layer exist by using a reinforcing belt formed of circumferential belts, in some cases the load dependence of cornering force were reduced.

By reducing the width of one inclined belt layer among the two inclined belt layers, the belt rigidity is deteriorated and the belt becomes likely to be displaced in the tire width direction, which reduces the obtained cornering force. Here, at low load, the displacement amount of the belt during cornering is small. Therefore, at low load, the reduction amount of the cornering force due to the reduction of the rigidity of the belt is small.

On the other hand, at high load, the displacement of the belt becomes large. Here, at high load, the displacement amount of the belt during cornering is large. Therefore, the degree of cornering force reduction due to belt displacement is large.

In this way, the degree of cornering force reduction due to belt displacement is larger at high load, and thus by reducing the width of one inclined belt layer among the two inclined belt layers, it is possible to lower the load dependence of cornering force. However, if the width of either inclined belt layer is reduced, a region with reduced number of inclined belt layers is generated. In this region, since the inclined belt layers are few, due to, e.g., easiness of tire diameter growth, the durability of the tire is deteriorated.

Then, we have studied means for compensating the durability of this region without reenlarging the reduced dependence of cornering force. As a result, it was discovered that even if a circumferential cord layer for compensating the rigidity is disposed in the region in which the number of inclined belt layers is reduced due to reduction of the width of the inclined belt layers, the cornering force at high load is not increased. The reason is considered as that a locally disposed circumferential cord layer contributes little to the rigidity of the tire width direction, and does not suppress the displacement of the inclined belt layers.

Based on such knowledge, we accomplished this disclosure as a result of further study on the dimensional ratio of the two inclined belt layers.

Hereinafter, an embodiment of this disclosure is exemplified in details by referring to the drawings.

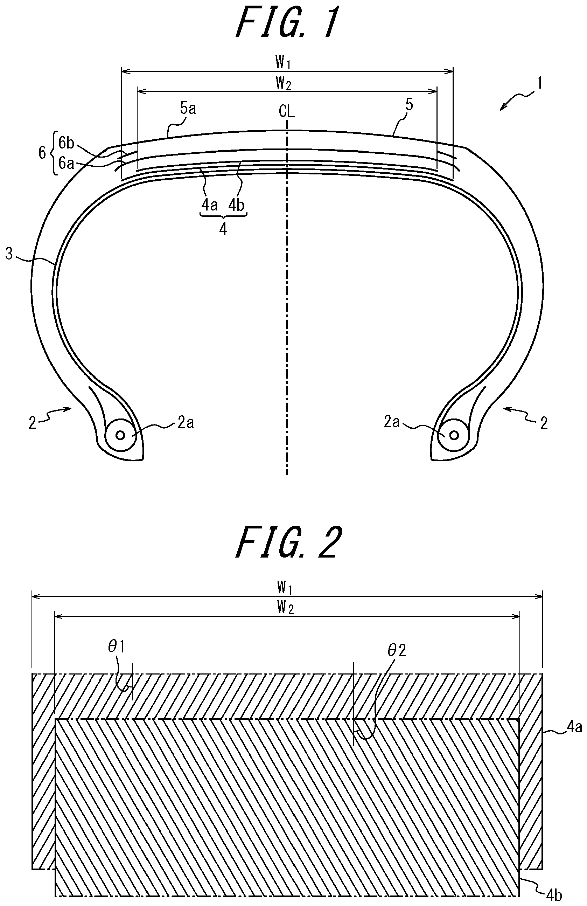

FIG. 1 illustrates a schematic cross-sectional view in the tire width direction of the pneumatic tire (hereinafter referred to as merely "the tire") according to the first embodiment of this disclosure. Moreover, in FIG. 1, the tire widthwise cross section of the tire at a condition when the tire is mounted to an applicable rim, applied with a prescribed internal pressure and set to an unloaded condition (hereinafter referred to as "the reference state" as well), is illustrated.

As illustrated in FIG. 1, the tire (pneumatic tire) 1 of the present embodiment includes a carcass 3 toroidally extending between bead cores 2a between a pair of bead portions 2, a belt 4 arranged on a tire radial outer side of a crown portion of the carcass 3, and a tread 5 arranged on a tire radial outer side of the belt 4. The material of the cords of the carcass ply of the carcass 3 may be, e.g., steel cord, etc. without limited thereto.

The belt 4 of the tire 1 according to the first embodiment as illustrated in FIG. 1 is formed of an inclined belt layer 4a having a tire widthwise width W1, and an inclined belt layer 4b having a tire widthwise width W2 smaller than the inclined belt layer 4a. The two inclined belt layers 4a, 4b are belt layers having belt cords extending in a manner inclined with respect to the tire circumferential direction, where the belt cords cross each other between the inclined belt layers. The material of the belt cords is preferably steel cord, without limited thereto. The one inclined belt layer 4a arranged on the tire radial inner side has a tire widthwise width W1 larger than the tire widthwise width W2 of the other inclined belt layer 4b arranged on the tire radial outer side. In this disclosure, the inclined belt layer 4a and the inclined belt layer 4b are formed in a manner such that the ratio W2/W1 of the width W1 of the inclined belt layer 4a to the width W2 of the inclined belt layer 4b satisfies the relation expression $0.25 \leq (W2/W1) \leq 0.8$. In particular, in the present embodiment, the inclined belt layer 4a and the inclined belt layer 4b are formed in a manner such that the ratio W2/W1 of the width W1 of the inclined belt layer 4a to the width W2 of the inclined belt layer 4b satisfies the relation expression $0.6 \leq (W2/W1) \leq 0.8$. Further, the inclined belt layer 4b with a smaller tire widthwise width may be arranged on the tire radial inner side, and the inclined belt layer 4a with a larger tire widthwise width may be arranged on the tire radial outer side.

FIG. 2 illustrates a schematic view of the structure of the belt 4 of the tire of FIG. 1. In the present embodiment, the inclined belt layer 4a is disposed in a manner such that an inclination angle $\theta 1$ of the cords of the inclined belt layer 4a with a larger tire widthwise width with respect to the tire circumferential direction is $10° \leq \theta 1 \leq 30°$. Moreover, in the present embodiment, the inclined belt layer 4b is disposed in a manner such that an inclination angle $\theta 2$ of the cords of the inclined belt layer 4b with a smaller tire widthwise width with respect to the tire circumferential direction is $10° \leq \theta 2 \leq 30°$. Further, the inclined belt layer 4a and the inclined belt layer 4b of the present embodiment are disposed in a manner such that tire widthwise centers of the inclined belt layer 4a and the inclined belt layer 4b are in accordance on the tire equatorial plain CL.

As illustrated in FIG. 1, the tire 1 of this disclosure further includes a reinforcing belt 6 on the tire radial outer side of the belt 4. The reinforcing belt 6 of the present embodiment is formed of two circumferential belt layers 6a and 6b. The circumferential belt layer 6a is formed in a manner covering the entire belt 4 in the tire width direction. The circumferential belt layer 6b is disposed in a manner separated from a tire radial outer side of the circumferential belt layer 6a, in merely a tire widthwise region between an end of the inclined belt layer 4a and an end of the inclined belt layer 4b. The circumferential belt layers 6a and 6b preferably use cords formed of organic fibers, and may use cords formed of organic fibers such as aramid and the like, hybrid cords of aramid and nylon, etc., without limited thereto. In the present embodiment, the circumferential belt layer 6b is disposed on the tire radial outer side of the circumferential belt layer 6a, while the circumferential belt layer 6b may be disposed on a tire radial inner side of the circumferential belt layer 6a as well.

The effect of the tire according to present embodiment is described in the following.

According to the tire of the present embodiment, first, in the aforementioned reference state, among the two inclined belt layers for forming the belt 4, when W1 is the tire widthwise width of the inclined belt layer 4a with a larger tire widthwise width, and W2 is the tire widthwise width of the inclined belt layer 4b, the ratio W2/W1 satisfies the relation expression $0.25 \leq (W2/W1) \leq 0.8$. The tire of the present embodiment further includes the reinforcing belt 6 formed of the circumferential belt layers 6a and 6b, and the circumferential rigidity of the reinforcing belt 6 is higher in the tire widthwise region between the end of the inclined belt layer 4a and the end of the inclined belt layer 4b than on the tire widthwise side inner than this region.

As mentioned above, at low load, the displacement amount of the belt during cornering is small. Therefore, at low load, the reduction amount of the cornering force due to the reduction of the rigidity of the belt is small. On the other hand, at high load, the displacement of the belt becomes large. Here, at high load, the displacement amount of the belt during cornering is large. Therefore, the degree of cornering force reduction due to belt displacement is large. In this way, the degree of cornering force reduction due to belt displacement is larger at high load, and thus by reducing the width of one inclined belt layer among the two inclined belt layers, the load dependence of cornering force is reduced. Moreover, in a part where the number of inclined belt layers is reduced due to the reduction of the width of the inclined belt layer, by disposing circumferential cord layers for compensating the rigidity, the width of the inclined belt layers is reduced without increasing the degree of cornering force at high load, and thus the diameter growth of the tire in the region in which the number of the inclined belt layers is reduced is suppressed and the durability is compensated.

According to the above, the tire of the present embodiment is capable of reducing the load dependence of cornering force and simultaneously ensuring the durability.

Here, if $0.25 > (W2/W1)$, there are cases that the belt rigidity is excessively small and a sufficient cornering force cannot be obtained. Moreover, if (W2/W1)>0.8, there are cases that the reduction of the belt rigidity is insufficient, and the load dependence of cornering force cannot be reduced.

In particular, regarding the circumferential rigidity according to the aforementioned definition, the circumferential rigidity of the reinforcing belt 6 in the region between the end of the inclined belt layer 4a and the end of the inclined belt layer 4b is preferably 1.5 to 2.5 times to the circumferential rigidity of the reinforcing belt 6 on the tire widthwise side inner than this region.

Here, in this disclosure, the ratio W2/W1 preferably satisfies the relation expression 0.6≤(W2/W1)≤0.8. By forming the belt layers 4a and 4b in such manner, it is possible to maintain a high rigidity of the tire, and to suppress excessive increase of the rigidity of the tire. Therefore, it is possible to obtain a sufficient cornering force, and to simultaneously increase the cornering force at high load.

As illustrated in the embodiment of FIG. 1, in the pneumatic tire of this disclosure, the number of the circumferential belt layers disposed within the region between the end of the inclined belt layer 4a and the end of the inclined belt layer 4b is preferably more than the number of the circumferential belt layers disposed on the tire widthwise side inner than this region. Such relation of the number of the circumferential belt layers is capable of improving the rigidity of the tire widthwise region between the end of the inclined belt layer 4a and the end of the inclined belt layer 4b with a simple configuration. Here, the rigidity within this region may be improved with a method other than setting the number of the circumferential belt layers disposed in this region larger than the number of the circumferential belt layers disposed on the tire widthwise side inner than this region. For example, the rigidity between the end of the inclined belt layer 4a and the end of the inclined belt layer 4b may be improved by using cords with a Young's modulus higher than the cords used in the circumferential belt layers on a tire widthwise side inner than this region as the cords used in the circumferential belt layers within this region. Here the "Young's modulus" is determined according to JIS L1017 8.8(2002) by performing tests according to JIS L1017 8.5 a) (2002). Further, a filament number per unit length in the tire width direction in a tire widthwise cross section may be varied, a filament number within the aforementioned tire widthwise region may be set larger than the filament number on the side inner than the aforementioned tire widthwise region.

In particular, in the case where the configuration of the cords other than Young's modulus, such as the layer number, the filament number per unit length and the like, is the same, the Young's modulus in the region between the end of the belt layer 4a and the end of the belt layer 4b is preferably 1.5 to 2.5 times to the Young's modulus of the cords on the side inner than the aforementioned tire widthwise region. Similarly, in the case where the configuration of the cords other than the filament number per unit length in the tire width direction, such as the layer number, the Young's modulus and the like, is the same, the filament number per unit length in the tire width direction in the region between the end of the belt layer 4a and the end of the belt layer 4b is preferably 1.5 to 2.5 times to the filament number per unit length in the tire width direction of the cords on the side inner than the aforementioned tire widthwise region.

Moreover, as illustrated in the embodiment of FIG. 1, in the pneumatic tire of this disclosure, it is preferable to dispose two circumferential belt layers 6a and 6b within the tire width direction region between the end of the belt layer 4a and the end of the belt layer 4b, and dispose one circumferential belt layer 6a on the tire widthwise side inner than this region. According to such configuration, it is possible to improve the rigidity of the region between the end of the belt layer 4a and the end of the belt layer 4b with a small number of members. Further, the number of the circumferential belt layers in this region and the tire widthwise side inner than this region are not limited to respectively two and one. For example, it is possible to dispose circumferential belt layers merely in this region, without disposing circumferential belt layers in the tire widthwise side inner than this region. Further, for example, three or more circumferential belt layers may be disposed within this region, and in this case, the difference between the number of the circumferential belt layers within this region and within the tire widthwise side inner than this region may be one, two or more.

As illustrated in FIG. 2, in the pneumatic tire of this disclosure, it is preferable that the inclination angle $\theta1$ of the cords of the inclined belt layer 4a with respect to the tire circumferential direction is 10°≤$\theta1$≤30°, and the inclination angle $\theta2$ of the cords of the inclined belt layer 4b with respect to the tire circumferential direction is 10°≤$\theta2$≤30°. In this way, it is possible to suppress excessive deterioration of widthwise rigidity, and to suppress excessive reduction of the cornering force at high load.

Hereinafter, examples for this disclosure are described, while this disclosure is not limited to these examples.

EXAMPLES

In order to certify the effect of this disclosure, the tires of Examples 1 to 3 and Comparative Examples 1 to 3 were produced experimentally. The dimensions of each tire are as shown in the following Table 1. The tire size of each is 225/50R17. Each tire was subjected to tests for evaluating the load dependence of cornering force and the durability of tire.

Here, each tire is a tire as illustrated in FIG. 1 including a carcass fixed to bead cores embedded in a pair of bead portions, an inclined belt formed of two inclined belt layers disposed on a tire radial side outer than a crown portion of the carcass, and a tread.

<Cornering force>

The tires of each aforementioned example and comparative example were mounted to a rim (size: 7.5J-17), applied with an internal pressure of 220 kPa, and then installed to a vehicle, and subjected to measurement on a flat belt type cornering testing machine. Here, measured was the cornering force obtained at a belt speed of 100 km/h under two different load conditions, under the load conditions respectively corresponding to 80% and 30% of a maximum load capability at applicable size and ply rating.

<Rigidity of reinforcing belt>

When E1 is a Young's modulus of the reinforcing belt fibers, and a is a number of cords per unit width of the belt, the rigidity of the reinforcing belt was evaluated as a×E1.

<Tire durability>

The tires of each aforementioned examples and comparative examples were travelled on a drum testing machine in the state mounted to a rim (size: 7.5J-17) and applied with an internal pressure of 220 kPa, and the durability was evaluated by comparing the degrees of breakage amount (size of crack) generated inside and outside the tire.

The result was as shown in Table 1. The value of the cornering force is evaluated via index evaluation, with the cornering force of the tire at 30% of the load of the tire 2 of Comparative Example as 100. A larger index shows a larger cornering force. Further, by referring to the $\alpha/\beta$ (%) in the table, the load dependence of cornering force can be understood. A lower value shows a lower load dependence.

[Table 1]

| | | Example 1 | Example 2 | Example 3 | Comparative Example 1 | Comparative Example 2 | Comparative Example 3 |
|---|---|---|---|---|---|---|---|
| Inclined belt layer 3a | W1 (mm) | 197 | 197 | 197 | 197 | 197 | 197 |
| | $\theta 1$ | 30 | 40 | 40 | 30 | 30 | 30 |
| Inclined belt layer 3b | W2 (mm) | 140 | 140 | 100 | 40 | 180 | 140 |
| | $\theta 2$ | 30 | 40 | 30 | 30 | 30 | 30 |
| W2/W1 | | 0.7 | 0.7 | 0.5 | 0.2 | 0.91 | 0.7 |
| Rigidity of reinforcing belt | Within region | 200 | 200 | 200 | 200 | 200 | 100 |
| | Inner than region | 100 | 100 | 100 | 100 | 100 | 100 |
| Number of circumferential belt layers | Within region | 2 | 2 | 2 | 2 | 2 | 1 |
| | Inner than region | 1 | 1 | 1 | 1 | 1 | 1 |
| Cornering force | $\alpha$ at high load | 199.68 | 186.03 | 173.23 | 137.26 | 208.00 | 198.90 |
| | $\beta$ at low load | 101.00 | 92.13 | 94.25 | 84.39 | 100.00 | 101.50 |
| | $\alpha/\beta$ | 1.98 | 2.02 | 1.84 | 1.63 | 2.08 | 1.96 |

As shown in Table 1, each tire according to Examples 1 to 3 had improved load dependence of cornering force as compared to the tires according to Comparative Examples 1 to 3. Moreover, although not shown in Table 1, each tire according to Examples 1 to 3 had an ensured tire durability as compared to the tires according to Comparative Examples 1 to 3. On the other hand, in Comparative Example 1, although the load dependence of cornering force was improved, since the width W2 of the inclined belt layer 4b was small and the value of W2/W1 was smaller than 0.25, the durability of the tire could not be ensured. In comparative Example 2, since the width W2 of the inclined belt layer 4b was large and the value of W2/W1 was larger than 0.8, although the tire durability was not worse as compared to Examples 1 to 3, the load dependence of cornering force could not be improved. In Comparative Example 3, the numbers of the circumferential belt layer were equal within the regions and among the regions, the durability of the tire could not be ensured. Comparing Example 1 and Example 2, Example 1, of which $\theta 1$ and $\theta 2$ are 10° or more and 30° or less, has a reduced load dependence of cornering force. Comparing Example 2 and Example 3, Example 2, which satisfies $0.6 \leq (W2/W1) \leq 0.8$, is capable of maintaining a high durability of the tire.

REFERENCE SIGNS LIST

1    tire (pneumatic tire)

2        bead portion

3        carcass

4        belt

4a, 4b    inclined belt layer

5        tread

6        reinforcing belt

6a, 6b    circumferential belt layer

CL        tire equatorial plain

**Claims**

1.  A pneumatic tire (1), comprising a belt (4) formed of two inclined belt layers (4a, 4b) formed of a rubberized layer of cords extending in a manner inclined with respect to a tire circumferential direction, the cords crossing each other between the layers (4a, 4b), wherein:

    at an unloaded condition, when the pneumatic tire (1) is mounted to an applicable rim and is applied with a prescribed internal pressure, the two inclined belt layers (4a, 4b) have different tire widthwise widths (W1, W2);
    a tire radial outer side of the belt further includes a reinforcing belt (6) formed of circumferential belt layers (6a, 6b) formed of a rubberized layer of cords extending along the tire circumferential direction;
    a circumferential rigidity of the reinforcing belt (6) in a tire widthwise region between an end of one inclined belt layer (4a) and an end of the other inclined belt layer (4b) is higher than a circumferential rigidity of the reinforcing belt (6) in a tire widthwise inner side of the region;

    **characterised in that**:
    among the two inclined belt layers, when W1 (mm) is a tire widthwise width of the one inclined belt layer (4a) having a larger tire widthwise width, W2 (mm) is a tire widthwise width of the other inclined belt layer (4b), a ratio W2/W1 satisfies a relation expression

$$0.25 \leq (W2/W1) \leq 0.8;$$

and **in that** the reinforcing belt (6) is formed of two circumferential belt layers (6a, 6b), wherein one circumferential belt layer (6a) is formed in a manner covering the entire belt (4) and the other circumferential belt layer (6b) is separated with a tire equatorial plane (CL) as the boundary and disposed in merely a tire widthwise region between an end of the one inclined belt layer (4a) and an end of the other inclined belt layer (4b).

2. The pneumatic tire (1) according to claim 1, wherein: the ratio W2/W1 further satisfies a relation expression

$$0.6 \leq (W2/W1) \leq 0.8.$$

3. The pneumatic tire (1) according to claim 1 or 2, wherein: the number of circumferential belt layers (6a, 6b) disposed within the region is larger than a number of circumferential belt layers (6a, 6b) disposed on a tire widthwise side inner than the region.

4. The pneumatic tire according to claim 3, wherein: two circumferential belt layers (6a, 6b) are disposed within the region, and one circumferential belt layer (6a, 6b) is disposed on a tire widthwise side inner than the region.

5. The pneumatic tire according to claim 1, wherein: an inclination angle $\theta$ of the cords of the inclined belt layers (4a, 4b) with respect to the tire circumferential direction is $10° \leq \theta \leq 30°$.

**Patentansprüche**

1. Luftreifen (1), der einen Gürtel (4) umfasst, der aus zwei geneigten Gürtellagen (4a, 4b) geformt ist, die aus einer gummierten Lage von Kords geformt sind, die sich auf eine in Bezug auf eine Reifenumfangsrichtung geneigte Weise erstrecken, wobei die Kords einander zwischen den Lagen (4a, 4b) kreuzen, wobei:

in einem unbelasteten Zustand, wenn der Luftreifen (1) auf einer zulässigen Felge montiert ist und mit einem vorgeschriebenen Innendruck eingesetzt wird, die zwei geneigten Gürtellagen (4a, 4b) unterschiedliche Breiten (W1, W2) in Reifenbreitenrichtung aufweisen,
eine Reifenradialaußenseite des Gürtels ferner einen Verstärkungsgürtel (6) einschließt, der aus umlaufenden Gürtellagen (6a, 6b) geformt ist, die aus einer gummierten Lage von Kords geformt sind, die sich entlang der Reifenumfangsrichtung erstrecken,
eine Umfangssteifigkeit des Verstärkungsgürtels (6) in einem Reifenbreitenbereich zwischen einem Ende der einen geneigten Gürtellage (4a) und einem Ende der anderen geneigten Gürtellage (4b) höher ist als eine Umfangssteifigkeit des Verstärkungsgürtels (6) auf einer in Reifenbreitenrichtung inneren Seite des Bereichs, **dadurch gekennzeichnet, dass**:
unter den zwei geneigten Gürtellagen, wenn W1 (mm) eine Breite der einen geneigten Gürtellage (4a) in Reifenbreitenrichtung ist, die eine größere Breite in Reifenbreitenrichtung aufweist, W2 (mm) eine Breite der anderen geneigten Gürtellage (4b) ist, ein Verhältnis W2/W1 einen Vergleichsausdruck

$$0{,}25 \leq (W2/W1) \leq 0{,}8 \text{ erfüllt,}$$

und dadurch, dass
der Verstärkungsgürtel (6) aus zwei umlaufenden Gürtellagen (6a, 6b) geformt ist, wobei die eine umlaufende Gürtellage (6a) auf eine Weise geformt ist, dass sie den gesamten Gürtel (4) abdeckt, und die andere umlaufende Gürtellage (6b) mit einer Reifen-Äquatorialebene (CL) als der Begrenzung getrennt und nur in einem Reifenbreitenbereich zwischen einem Ende der einen geneigten Gürtellage (4a) und einem Ende der anderen geneigten Gürtellage (4b) angeordnet ist.

2. Luftreifen (1) nach Anspruch 1, wobei: das Verhältnis W2/W1 ferner einen Vergleichsausdruck

$$0{,}6 \leq (W2/W1) \leq 0{,}8 \text{ erfüllt.}$$

3. Luftreifen (1) nach Anspruch 1 oder 2, wobei: die Anzahl von umlaufenden Gürtellagen (6a, 6b), die innerhalb des Bereichs angeordnet sind, größer ist als die Anzahl von umlaufenden Gürtellagen (6a, 6b), die auf einer Seite, in Reifenbreitenrichtung weiter innen als der Bereich, angeordnet sind.

**4.** Luftreifen nach Anspruch 3, wobei: zwei umlaufende Gürtellagen (6a, 6b) innerhalb des Bereichs angeordnet sind und eine umlaufende Gürtellage (6a, 6b) auf einer Seite, in Reifenbreitenrichtung weiter innen als der Bereich, angeordnet ist.

**5.** Luftreifen nach Anspruch 1, wobei: ein Neigungswinkel $\theta$ der Kords der geneigten Gürtellagen (4a, 4b) in Bezug auf die Reifenumfangsrichtung $10° \leq \theta \leq 30°$ ist.

**Revendications**

**1.** Bandage pneumatique (1), comprenant une ceinture (4) formée à partir de deux couches de ceinture inclinées (4a, 4b) formées d'une couche caoutchoute de câblés s'étendant de manière inclinée par rapport à une direction circonférentielle du bandage pneumatique, les câblés se croisant les uns les autres entre les couches (4a, 4b), dans lequel :

dans un état sans charge, lorsque le bandage pneumatique (1) est monté sur une jante applicable, et gonflé à la pression interne prescrite, les deux couches de ceinture inclinées (4a, 4b) ont des largeurs différentes (W1, W2) dans le sens de la largeur du bandage pneumatique ;
un côté externe, dans la direction radiale du bandage pneumatique, de la ceinture inclut en outre une ceinture de renforcement (6) formée à partir de couches de ceinture circonférentielles (6a, 6b) formées d'une couche caoutchoutée de câblés s'étendant le long de la direction circonférentielle du bandage pneumatique ;
une rigidité circonférentielle de la ceinture de renforcement (6), dans une région dans le sens de la largeur du bandage pneumatique, entre une extrémité d'une couche de ceinture inclinée (4a) et une extrémité de l'autre couche de ceinture inclinée (4b) est plus élevée qu'une rigidité circonférentielle de la ceinture de renforcement (6), dans un côté interne, dans le sens de la largeur du bandage pneumatique, de la région ;
**caractérisé en ce que** :
parmi les deux couches de ceinture inclinées, lorsque W1 (mm) représente une largeur, dans le sens de la largeur du bandage pneumatique, de ladite une couche de ceinture inclinée (4a), ayant une largeur supérieure, dans le sens de la largeur du bandage pneumatique, W2 (mm) représentant une largeur, dans le sens de la largeur du bandage pneumatique, de l'autre couche de ceinture inclinée (4b), un rapport W2/W1 satisfait une expression relationnelle de :

$$0{,}25 \leq (W2/W1) \leq 0{,}8 ;$$

et **en ce que** :
la ceinture de renforcement (6) est formée à partir de deux couches de ceinture circonférentielles (6a, 6b), une couche de ceinture circonférentielle (6a) étant formée d'une manière recouvrant l'ensemble de la ceinture (4), et l'autre couche de ceinture circonférentielle (6b) étant séparée, un plan équatorial du bandage pneumatique (CL) servant de limite, et étant disposée uniquement dans une région, dans le sens de la largeur du bandage pneumatique, entre une extrémité de ladite une couche de ceinture inclinée (4a) et une extrémité de l'autre couche de ceinture inclinée (4b).

**2.** Bandage pneumatique (1) selon la revendication 1, dans lequel :
le rapport W2/W1 satisfait en outre une expression relationnelle de :

$$0{,}6 \leq (W2/W1) \leq 0{,}8.$$

**3.** Bandage pneumatique (1) selon les revendications 1 ou 2, dans lequel : le nombre de couches de ceinture circonférentielles (6a, 6b) disposées dans la région est supérieur au nombre de couches de ceinture circonférentielles (6a, 6b) disposées sur un côté, dans le sens de la largeur du bandage pneumatique, situé plus vers l'intérieur que la région.

4. Bandage pneumatique selon la revendication 3, dans lequel : deux couches de ceinture circonférentielles (6a, 6b) sont disposées dans la région, une couche de ceinture circonférentielle (6a, 6b) étant disposée sur un côté, dans la sens de la largeur du bandage pneumatique, situé plus vers l'intérieur que la région.

5. Bandage pneumatique selon la revendication 1, dans lequel : un angle d'inclinaison θ des câblées des couches de ceinture inclinées (4a, 4b) par rapport à la direction circonférentielle du bandage pneumatique correspond à 10° ≤ θ ≤ 30°.

## FIG. 1

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007062468 A
- JP 2009280167 B
- JP 2012171423 B
- JP 2007161027 B
- US 5240057 A
- US 2010230020 A
- JP H04110205 B